# EUROPÄISCHE PATENTSCHRIFT

(11) **EP 1 270 130 B1**
(45) Veröffentlichungstag und Bekanntmachung des Hinweises auf die Patenterteilung: **24.03.2010**
(21) Anmeldenummer: 02405366.2
(22) Anmeldetag: 06.05.2002
(51) Int. Cl.: B23K 1/20, B23K 1/00

(54) **Lötverbindung und Verfahren zur Herstellung einer Lötverbindung**
Soldered joint and method for producing a soldered joint
Joint soudé et procédé pour réaliser des joints soudés

(30) Priorität: 20.06.2001 CH 11282001
(43) Veröffentlichungstag der Anmeldung: 02.01.2003
(73) Patentinhaber: Alstom Technology Ltd, 5400 Baden (CH)
(72) Erfinder: Benedetti, Bruno, 5722 Gränichen (CH); Nagler, Christoph, 8032 Zürich (CH); Stengele, Jörg, Dr., 5406 Ruetihof (CH)

(56) Entgegenhaltungen:
- DE-B- 2 454 457
- DE-C- 837 949
- FR-A- 977 750
- GB-A- 330 885
- US-A- 4 787 209
- PATENT ABSTRACTS OF JAPAN vol. 008, no. 203 (M-326), 18. September 1984 (1984-09-18) -& JP 59 092161 A (SUMITOMO DENKI KOGYO KK), 28. Mai 1984 (1984-05-28)

## Beschreibung

### Technisches Gebiet

Die Erfindung bezieht sich auf eine Lötverbindung gemäss Oberbegriff des Anspruchs 1.Sie betrifft auch ein Verfahren zur Herstellung einer Lötverbindung.

### Stand der Technik

Zum dauerhaften, festen Verfügen zweier aus Metall oder metallähnlichen Materialien bestehenden Fügepartnern wird üblicherweise eine bekannte Löttechnik angewandt, bei der die Fügepartner zunächst über eine gemeinsame Kontaktfläche miteinander in Berührung treten, in der ein Lötmaterial bereits vorgesehen oder nachträglich eingebracht wird. Das zwischen beiden Fügepartnern befindliche Lötmaterial wird durch Erwärmen verflüssigt und verteilt sich zwischen beiden Fügepartnern möglichst gleichmässig. Nach Erkalten der sich zwischen beiden Fügepartnern ausbildenden Lotschicht bildet sich eine in aller Regel innige Stoffverbindung aus.

Handelt es sich jedoch um das Verfügen zweier Bauteile bzw. Fügepartner, die überaus hohen thermischen und mechanischen Belastungen ausgesetzt sind, so bedarf es einer Fügetechnik von besonderer Güte. Ohne den im weiteren zu schildernden Erfindungsgedanken einzuschränken, wird auf ein spezielles in der Gasturbinentechnik vorherrschendes Fügeproblem hingewiesen, das durchaus auf ähnliche Fügekonstellationen in anderen technischen Gebieten übertragen werden kann.

Insbesondere gilt es zu Kühlzwecken sogenannte Prall-Kühlplatten innerhalb der Plattformen von Gasturbinenschaufeln zu integrieren, in denen Kühlkanalsysteme zur wirkungsvollen Kühlung der Gasturbinenschaufeln vorgesehen sind. Prall-Kühlplatten dienen einer effizienteren Kühlung der das Kühlsystem umgebenden inneren Schaufelwände, wodurch die thermische Belastbarkeit der Gasturbinenschaufel entscheidend verbessert werden kann. Die überaus extremen Betriebsbedingungen, denen eine Gasturbinenschaufel beim Betrieb einer Gasturbine ausgesetzt sind, erfordern von allen innerhalb einer Gasturbinenschaufel befindlichen Komponenten sowie den diesbezüglichen Fügeverbindungen ein Höchstmass an Belastbarkeit sowie mechanischer und thermischer Zuverlässigkeit. Lötverbindungen, die derart widrigen Betriebsbedingungen widerstehen müssen und eine dauerhafte Verbindung zwischen der Prall-Kühlplatte und den Auflagebereichen innerhalb einer Plattform in einer Gasturbinenschaufel zu gewährleisten haben, werden unter Verwendung flüssiger Lötmaterialien hergestellt. Flüssige Lötmaterialien eignen sich besser als alternative Lötmaterialien, bspw. in Form von Lötfolien, Lötpasten oder semiflüssigen Füllern vorliegen, zumal sich Flüssiglote im Vergleich zu anderen Lötmaterialarten möglichst homogen zwischen zwei miteinander zu verfügenden Fügepartnern verteilen.

Der Einsatz flüssiger Lötmaterialien sieht vor, dass zwei Fügepartner über eine gemeinsame Kontaktfläche in innigen Kontakt gebracht werden und dass anschliessend das Flüssiglot in den engen Zwischenspalt zwischen beiden Fügepartnern eingebracht wird. Die Flüssiglötschichtdicke, die sich von Seiten einer Umfangskante zwischen beide Fügepartnern längs ihrer Kontaktfläche ausbildet, beträgt typischerweise zwischen 0,03 und 0,05 mm. Eben gerade die Ausbildung einer möglichst homogenen Flüssiglotschicht zwischen beiden Fügepartnern trägt wesentlich zur Fügequalität der sich ausbildenden Lötverbindung bei.

Da die Einspeisung des Flüssiglotes nach dem derzeitigen Stand der Technik längs des Umfangsrandes der Kontaktfläche zwischen beiden unmittelbar aneinander grenzenden Fügepartnern erfolgt, ist nicht sichergestellt, dass sich das Flüssiglötmaterial über die gesamte Tiefe der Kontaktfläche auszubreiten vermag. Insbesondere bei grossflächigen Kontaktflächen zwischen zwei miteinander zu verfügenden Fügepartnern können Flächenbereiche mit grösserem Abstand zum Umfangsrand der Kontaktfläche von dem Flüssiglötmaterial unbenetzt bleiben. Auch sind keine unmittelbaren Überprüfungsmöglichkeiten vorhanden, mit denen die Benetzungsfläche zwischen beiden zu verfügenden Fügepartnern mit dem Flüssiglötmaterial beurteilt werden kann. Eine vollständige Benetzung der Kontaktfläche mit Flüssiglot ist jedoch für die Ausbildung einer dauerhaften Lötverbindung insbesondere bei den vorstehend genannten Bauteilen innerhalb einer Gasturbinenschaufel unabdingbar.

Aus GB 330,885 A ist ein Schweissverfahren zur Herstellung von Schweissverbindungen zwischen zwei rohrförmigen Fügepartnern bekannt geworden, die mit einem axialem Überlapp ineinander gesteckt werden. Der jeweils äussere, hülsenartig ausgebildete Fügepartner zur Aufnehmung des zweiten, rohrförmig ausgebildeten Fügepartners, weist innerhalb der Hülsenwand radial nach aussen orientierte Ausbuchtungen auf, die mit dem jeweils inneren Fügepartner einen abgeschlossenen Hohlraumeinschliessen, in dem Lotmaterial, beispielsweise in Form einer Lotpaste, eingebracht ist. Gemäss den Ausführungen in den Zeilen 60 bis 70 dieser Druckschrift kann entnommen werden, dass in einem gegenseitig ineinander gefügten Zustand beider Fügepartner das innerhalb des Hohlraumes eingeschlossene Lötmaterial aufgeschmolzen wird, wobei sich innerhalb des Hohlraumes Dämpfe bilden, die das verflüssigte Lötmaterial im Wege eines sich im Hohlraum ausbildenden Überdruckes in den Zwischenraum zwischen beiden gefügten Fügepartnern zu verdrängen vermag. Es liegt auf der Hand, dass einerseits die Ausbildung der jeweils in der Hülsenwand vorzusehenden Ausbuchtungen komplizierte und letztlich kostenintensive Formgebungsprozesse darstellen. Darüber hinaus gewinnt der Fachmann aus dieser Druckschrift die Erkenntnis, dass es zur Ausbildung einer möglichst homogenen Flüssiglotverteilung zwischen beiden Fügepartnern eines abgeschlossenen Volumens zwischen beiden Fügepartnern bedarf, in dem sich Dämpfe unter Überdruck ausbilden, durch den letztlich das verflüssigte Lotmaterial zwischen beide Fügepartner flächendeckend getrieben wird.

### Darstellung der Erfindung

Es besteht die Aufgabe, eine Vorrichtung sowie ein Verfahren zur Herstellung einer Lötverbindung zwischen zwei über eine gemeinsame Kontaktfläche verfügbare Fügepartner, mit einem Lötmaterial, das zwischen beiden Fügepartnern einbringbar ist, derart weiterzubilden, dass unter Verwendung von Flüssiglötmaterial, das zwischen beide Fügepartner eingebracht wird, sichergestellt werden kann, dass möglichst die gesamte Kontaktfläche zwischen beiden Fügepartnern mit dem Flüssiglötmaterial benetzt wird. Überdies soll es möglich sein, den Grad der mit Flüssiglötmaterial benetzten Kontaktfläche feststellen zu können.

Die Lösung der der Erfindung zugrundeliegenden Aufgabe ist im Anspruch 1 angegeben. Gegenstand des Anspruches 8 ist ein erfindungsgemässes Verfahren. Den Erfindungsgedanken vorteilhaft weiterbildende Merkmale sind Gegenstand der Unteransprüche sowie der weiteren Beschreibung, insbesondere unter Bezugnahme auf die Ausführungsbeispiele zu entnehmen.

Erfindungsgemäss ist eine Vorrichtung zur Herstellung einer Lötverbindung zwischen zwei über eine gemeinsame Kontaktfläche verfügbare Fügepartner, mit einem Lötmaterial, das zwischen beiden Fügepartnern einbringbar ist, derart weitergebildet, dass wenigstens ein Fügepartner im Bereich der Kontaktfläche wenigstens eine zur Kontaktfläche zugewandte Ausnehmung, ein sogenanntes Lötreservoir, vorsieht, in das das Lötmaterial einbringbar ist. Ferner ist das Lötreservoir vollständig von der Kontaktfläche begrenzt und umgeben.

Die erfindungsgemässe Idee sieht alternativ oder in Kombination mit der Zugabe flüssigen Lötmaterials durch den Umfangsspalt zweier fest aneinander gefügter Fügepartner die Bereitstellung flüssigen Lötmaterials inmitten der Kontaktfläche zwischen beiden Fügepartnern vor, indem wenigstens ein Fügepartner eine zur Kontaktfläche offen ausgebildete Ausnehmung aufweist, in der Flüssiglötmaterial eingebracht oder einbringbar ist. Vorzugsweise handelt es sich bei diesem Fügepartner um ein Flachmaterial, bei dem die wenigstens eine Ausnehmung, nachfolgend Lötreservoir genannt, das Flachmaterial vollständig durchsetzt. Somit ist es möglich, Flüssiglötmaterial in das Lötreservoir im Zustand beider bereits zusammengefügter Fügepartner einzufüllen. Aber auch massiv ausgebildete Fügepartner können mit als einseitig geöffnet ausgebildeten Ausnehmungen versehen werden, in die vor dem Verfügen beider Fügepartner die als Lötreservoire dienenden Ausnehmungen Flüssiglötmaterial eingefüllt wird, das nach Verfügen beider Fügepartner in den Zwischenspalt zwischen beide Fügepartner eindringen kann.

Die weiteren Ausführungen beziehen sich allgemein auf das Vorsehen von Lötreservoire innerhalb von als Flachmaterial ausgeführten Fügepartner, jedoch sei nochmals darauf hingewiesen, dass der Erfindungsgedanke auch auf die vorstehend beschriebenen massiven Fügepartner bezogen werden kann.

Die als Lötreservoir bezeichnete Ausnehmung weist vorzugsweise eine Langloch-förmige Kontur auf, die über möglichst abgerundete Kantenzüge zur Vermeidung von Materialbrüchen verfügt. Zudem ist insbesondere die zur Kontaktfläche zugewandte Umlaufkante des Lötreservoirs abgerundet ausgebildet, so dass das in dem Lötreservoir vorhandene Flüssiglötmaterial möglichst ungehindert in den Zwischenspalt zwischen beiden Fügepartnern eindringen kann.

In Abhängigkeit der Grösse der Kontaktfläche zwischen beiden zu verfügenden Fügepartnern ist eine Vielzahl derartiger Lötreservoire vorzusehen, die möglichst gleich beabstandet zueinander angeordnet sind. Die Anordnung der Lötreservoire erfolgt vorzugsweise unter Massgabe einer vollständigen Benetzbarkeit der Kontaktfläche mittels Flüssiglötmaterial, das durch die Vielzahl der vorgesehenen Lötreservoire zugeführt werden kann. Andererseits sollte die durch die Lötreservoire reduzierte Kontaktfläche nicht allzu gross sein, so dass die, eine dauerhafte Fügeverbindung garantierende Kontaktfläche möglichst grossflächig bleibt.

Durch Vorsehen einer Vielzahl von Lötreservoiren innerhalb eines als Flachmaterial ausgebildeten Fügepartners ist es zudem möglich durch optische Kontrolle durch die Lötreservoire hindurch zu Überprüfen, ob die Kontaktfläche vollständig mit Flüssiglötmaterial benetzt ist. Insbesondere kann man anhand der Lötreservoire festzustellen, ob sich Lötmaterial ausgehend von benachbarten Lötreservoiren im Bereich eines jeweiligen Lötreservoirs entlang der Kontaktfläche ausgebreitet hat, noch bevor das jeweilige Lötreservoir mit Flüssiglötmaterial aufgefüllt worden ist.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Flachmaterial mit einer Vielzahl von Lötreservoiren und
- Fig. 2: perspektivische Darstellung einer Prallluft-gekühlten Plattform einer Gasturbinenschaufel.

### Wege zur Ausführung der Erfindung, gewerbliche Verwendbarkeit

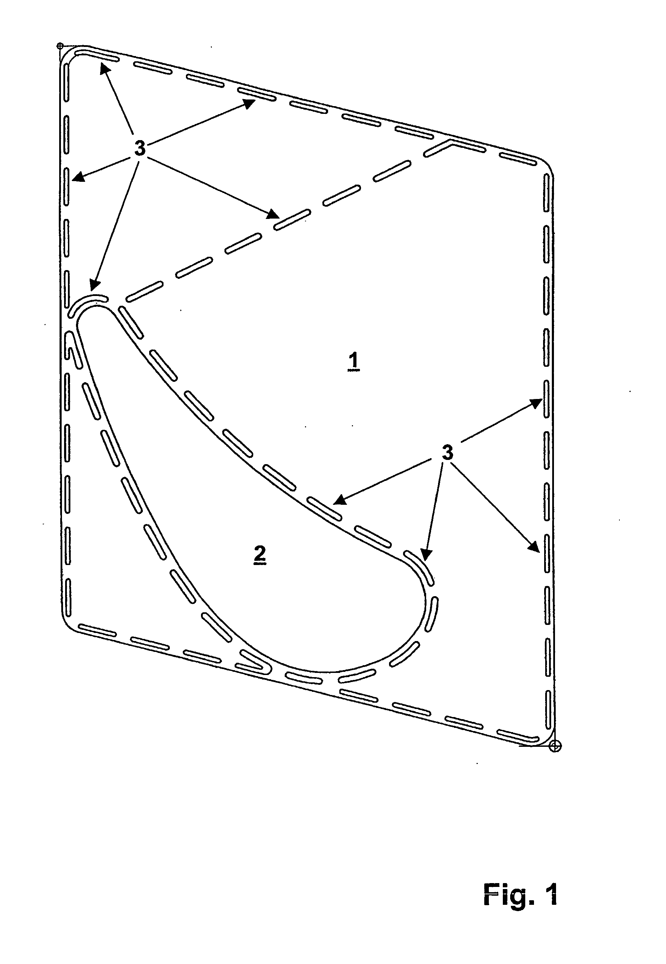

Der in Fig. 1 dargestellte Fügepartner 1 ist als Flachmaterial ausgebildet und stellt ein Halbfertigprodukt einer sogenannten Prall-Kühlplatte dar, die in ein Kühlsystem innerhalb einer Plattform einer Gasturbinenschaufel zu integrieren ist. Die Prall-Kühlplatte gemäss Fig. 1 weist jedoch noch keine für die Prallluft-Kühlung erforderlichen Strömungsdurchtrittsöffnungen auf, sondern sieht lediglich eine Aussenkontur vor, die an die Aufnahmekontur innerhalb einer Plattform einer Gasturbinenschaufel angepasst ist. Ferner ist eine an das Turbinenschaufelblattprofil angepasste Durchgangsöffnung 2 vorgesehen, durch die die für die Kühlung der Gasturbinenschaufel erforderlichen Kühlkanäle radialwärts zum Schaufelblatt verlaufen.

Zur Befestigung des als Prall-Kühlplatte ausgebildeten Fügepartners 1 in eine nicht in Fig. 1 dargestellte Plattform sind innerhalb der Plattform stegartig ausgebildete Kontaktflächen vorgesehen, auf die der Fügepartner 1 aufgelegt wird. Die stegartigen Kontaktflächen verlaufen entsprechend der Anordnung der in Fig. 1 in den Fügepartner 1 eingearbeiteten Ausnehmungen 3, die den Fügepartner 1 vollständig durchsetzen. Die Ausnehmungen 3 oder auch Lötreservoire sind als Langloch-förmige Durchgangsöffnungen ausgebildet und entsprechend mittig zu den nicht dargestellten stegartig ausgebildeten Kontaktflächen innerhalb der Plattform einer Gasturbinenschaufel angeordnet.

Die Lötreservoire 3 sind in dem aus einer Superlegierung bestehenden Fügepartner 1 vorzugsweise mittels üblicher Bohr- oder Frästechniken eingearbeitet, aus Gründen einer wirtschaftlichen Herstellung sind jedoch auch Laserbohrverfahren oder EDM-Techniken anwendbar. Bei der Herstellung derartiger Lötreservoire ist darauf zu achten, dass scharfkantige Konturen möglichst vermieden werden sollen, um interne Materialverspannungen und entsprechende Spannungskonzentrationen zu vermeiden.

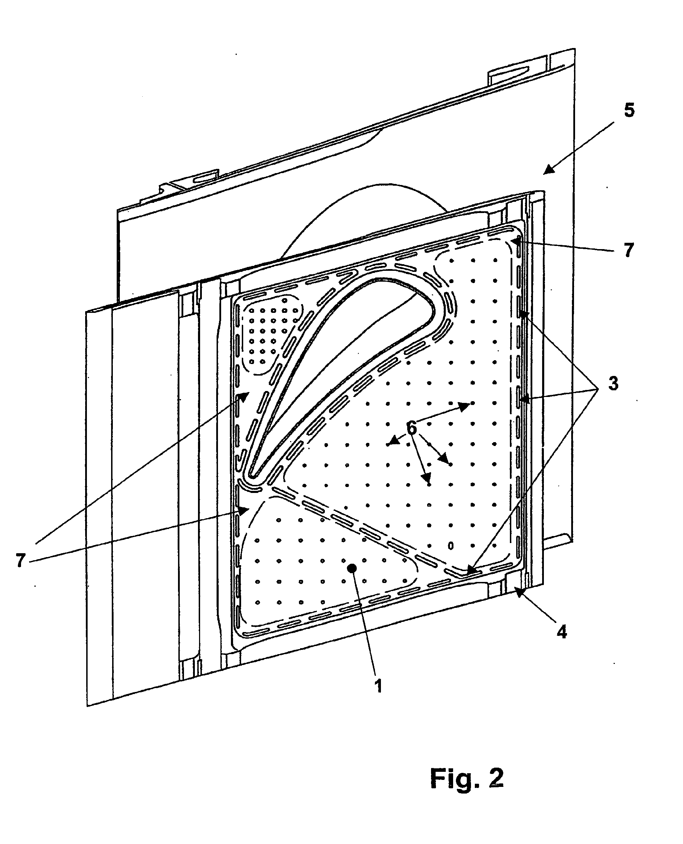

In Fig. 2 ist eine perspektivische Ansicht einer bereits in einer Plattform 4 einer Gasturbinenschaufel 5 integrierten Prall-Kühlplatte 1 dargestellt. Die Prall-Kühlplatte 1 weist neben den vorstehend bereits erläuterten Lötreservoiren 3 Prall-Kühlluftöffnungen 6 auf, durch die Kühlluft hindurchtreten kann.

Aus Fig. 2 ist ebenso die stegartig ausgebildete Kontaktfläche 7 zu entnehmen, über die die Prall-Kühlplatte 1 mit der Plattform 4 verbunden ist. Die Kontaktfläche 7 ist einerseits vom Umfangsrand der Prall-Kühlplatte 1 und andererseits durch die unterbrochene Linienführung in Fig. 2 begrenzt. Innerhalb der sich grösstenteils stegartig ausgebildeten Kontaktfläche 7 sind die Lötreservoire 3 weitgehend gleich verteilt zueinander und gleichbeabstandet von den jeweiligen Ränder der Kontaktfläche 7 angeordnet.

Nur der Vollständigkeit halber sei darauf hingewiesen, dass die mit der Prall-Kühlplatte 1 versehene Plattform 4, bei der es sich im übrigen um die innere Plattform einer in einer ersten Laufschaufelreihe angeordneten Laufschaufel in einer Gasturbinenstufe handelt, durch eine nicht dargestellte Deckplatte gasdicht verschlossen wird und somit die Prall-Kühlplatte ein wichtiger Bestandteil eines inneren Kühlsystems innerhalb einer Gasturbinenschaufel darstellt.

## Patentansprüche

1. Lötverbindung zwischen zwei über eine gemeinsame Kontaktfläche verfügbare Fügepartner (1), mit einem Lötmaterial, das zwischen beiden Fügepartnern einbringbar ist, und wenigstens ein Fügepartner im Bereich der Kontaktfläche (7) wenigstens einer zur Kontaktfläche zugewandte Ausnehmung, ein sogenanntes Lötreservoir (3) aufweist, das vollständig von der Kontaktfläche (7) begrenzt und umgeben ist, in das das Lötmaterial einbringbar ist, **dadurch gekennzeichnet, dass** wenigstens der Fügepartner (1), in dem das wenigstens eine Lötreservoir (3) vorgesehen ist, als Flachmaterial ausgebildet ist, dass das Lötreservoir (3) eine das Flachmaterial vollständig durchsetzende Öffnung ist, die mittel Bohr- oder Frästechnik in das Flachmaterial eingearbeitet ist, und dass das Lötreservoir (3) zur Ausnehmung orientierte abgerundete Begrenzungskanten aufweist.

2. Lötverbindung nach Anspruch 1, **dadurch gekennzeichnet, dass** das Lötreservoir (3) eine geradlinig oder gekrümmt verlaufende Langloch-förmige Ausnehmung ist.

3. Lötverbindung nach einem der Ansprüche 1 oder 2, **dadurch gekennzeichnet, dass** das Lötmaterial ein Flüssiglot oder ein verflüssigbares Lötmaterial ist.

4. Lötverbindung_nach einem der Ansprüche 1 bis 3, **dadurch gekennzeichnet, dass** das wenigstens eine Lötreservoir (3) mittig zur Kontaktfläche (7) angeordnet ist.

5. Lötverbindung nach einem der Ansprüche 1 bis 4, **dadurch gekennzeichnet, dass** eine Vielzahl von Lötreservoirs (3) in dem wenigstens einen Fügepartner (1) vorgesehen sind, die gleich verteilt relativ zur Kontaktfläche (7) angeordnet sind.

6. Verfahren zur Herstellung einer Lötverbindung nach einem der Ansprüche 1 bis 5, **dadurch gekennzeichnet, dass** beide Fügepartner über die gemeinsame Kontaktfläche (7) in Kontakt gebracht und gegeneinander fixiert werden, dass flüssiges Lötmaterial unter Einwirkung thermischer Energie in das wenigstens eine Lötreservoir (3) derart eingebracht wird, dass unter Verwendung eines Flachmaterials als Fügepartner, in dem wenigstens ein das Flachmaterial vollständig durchsetzendes Lötreservoir (3) vorgesehen wird, das Lötmaterial in das Lötreservoir (3) eingefüllt wird, bis das Lötmaterial nicht mehr weiter zwischen beiden Fügepartnern eindringt.

7. Verfahren nach Anspruch 6, **dadurch gekennzeichnet, dass** das gegenseitige Fixieren beider Fügepartner mittels Punktschweissen erfolgt.

8. Verwendung der Lötverbindung nach einem der Ansprüche 1-5 zum Verfügen zweier Metallflächenteile.

9. Verwendung der Lötverbindung nach einem der Ansprüche 1-5 zum Verfügen eines aus einer Super-Legierung bestehenden Flachmaterials mit einem Metallflächenteil.

10. Verwendung der Lötverbindung nach Anspruch 8 oder 9, **dadurch gekennzeichnet, dass** eine Prall-Kühlplatte (1) das wenigstens eine Lötreservoir (3) aufweist und mit einer Plattform einer Gasturbinenschaufel (5) verfügt wird.

## Claims

1. Soldered joint between two joining partners (1) which can be joined via a common contact surface, using a solder material which can be introduced between the two joining partners, and at least one joining partner has, in the region of the contact surface (7), at least one recess, a so-called solder reservoir (3), which faces the contact surface, is completely delimited and surrounded by the contact surface (7) and into which the solder material can be introduced, **characterized in that** at least the joining partner (1), in which the at least one solder reservoir (3) is provided, is in the form of flat material, **in that** the solder reservoir (3) is an opening which passes all the way through the flat material and is worked into the flat material by means of drilling or milling technology, and **in that** the solder reservoir (3) has rounded boundary edges oriented towards the recess.

2. Soldered joint according to Claim 1, **characterized in that** the solder reservoir (3) is a slot-shaped recess which runs along a straight or curved line.

3. Soldered joint according to either of Claims 1 and 2, **characterized in that** the solder material is a liquid solder or a solder material which can be liquefied.

4. Soldered joint according to one of Claims 1 to 3, **characterized in that** the at least one solder reservoir (3) is arranged centrally with respect to the contact surface (7).

5. Soldered joint according to one of Claims 1 to 4, **characterized in that** a multiplicity of solder reservoirs (3) are provided in the at least one joining partner (1) and are uniformly distributed in relation to the contact surface (7).

6. Process for producing a soldered joint according to one of Claims 1 to 5, **characterized in that** the two joining partners are brought into contact with each other and fixed against one another via the common contact surface (7), **in that**, under the action of thermal energy, liquid solder material is introduced into the at least one solder reservoir (3) in such a manner that, when a flat material in which at least one solder reservoir (3) which passes all the way through the flat material is provided is used as the joining partner, the solder material is introduced into the solder reservoir (3) until the solder material does not penetrate any further between the two joining partners.

7. Process according to Claim 6, **characterized in that** the two joining partners are fixed with respect to each other by means of spot-welding.

8. Use of the soldered joint according to one of Claims 1-5 for joining two metal surface parts.

9. Use of the soldered joint according to one of Claims 1-5 for joining a flat material which consists of a superalloy to a metal surface part.

10. Use of the soldered joint according to Claim 8 or 9, **characterized in that** an impingement cooling plate (1) contains the at least one solder reservoir (3) and is joined to a platform of a gas turbine blade or vane (5).

## Revendications

1. Liaison brasée entre deux partenaires de jonction (1) que l'on peut amener à disposer d'une surface commune de contact, au moyen d'un matériau de brasure qui peut être apporté entre les deux partenaires de jonction, au moins un partenaire de jonction présentant dans la zone occupée par la surface de contact (7) au moins une découpe tournée vers la surface de contact ce que l'on appelle un réservoir de brasure (3) délimité et entouré complètement par la surface de contact (7) et dans lequel le matériau de brasure peut être apporté,
**caractérisée en ce que**
au moins le partenaire de jonction (1) dans lequel sont prévus le ou les réservoirs de brasure (3) est configuré comme matériau plat,
**en ce que** le réservoir de brasure (3) est une ouverture qui traverse complètement le matériau plat et qui est ménagée dans le matériau plat par une technique de forage ou de fraisage et
**en ce que** le réservoir de brasure (3) est délimité par des bords arrondis orientés vers la découpe.

2. Liaison brasée selon la revendication 1, **caractérisée en ce que** le réservoir de brasure (3) est une découpe en forme de trou oblong qui s'étend en ligne droite ou en courbe.

3. Liaison brasée selon l'une des revendications 1 ou 2, **caractérisée en ce que** le matériau de brasure est une brasure liquide ou un matériau de brasure liquéfiable.

4. Liaison brasée selon l'une des revendications 1 à 3, **caractérisée en ce que** le ou les réservoirs de brasure (3) sont disposés au milieu de la surface de contact (7).

5. Liaison brasée selon l'une des revendications 1 à 4, **caractérisée en ce que** plusieurs réservoirs de brasure (3) sont prévus dans le ou les partenaires de jonction (1) et sont répartis uniformément par rapport à la surface de contact (7).

6. Procédé de formation d'une liaison brasée selon l'une des revendications 1 à 5, **caractérisé en ce que**
les deux partenaires de jonction sont mis en contact sur toute la surface de contact (7) et sont immobilisés l'un par rapport à l'autre,
**en ce qu'**un matériau liquide de brasure est apporté dans le ou les réservoirs de brasure (3) sous l'action d'une énergie thermique,
**en ce que** par recours à un matériau plat comme partenaire de jonction qui présente au moins un réservoir de brasure (3) qui traverse complètement le matériau plat, le matériau de brasure est placé dans le réservoir de brasure (3) jusqu'à ce que le matériau de brasure ne pénètre plus entre les deux partenaires de jonction.

7. Procédé selon la revendication 6, **caractérisé en ce que** l'immobilisation mutuelle des deux partenaires de jonction s'effectue par soudage par points.

8. Utilisation de la liaison brasée selon l'une des revendications 1 à 5 pour relier deux pièces métalliques plates.

9. Utilisation de la liaison brasée selon l'une des revendications 1 à 5 pour joindre un matériau plat constitué d'un superalliage à une pièce métallique plate.

10. Utilisation de la liaison brasée selon les revendications 8 ou 9, **caractérisée en ce qu'**une plaque refroidie de déflecteur (1) présente le ou les réservoirs de brasure (3) et est jointe à la plateforme d'une aube (5) de turbine à gaz.
